# EUROPÄISCHE PATENTSCHRIFT

(11) **EP 3 240 994 B1**
(45) Veröffentlichungstag und Bekanntmachung des Hinweises auf die Patenterteilung: **12.12.2018**
(21) Anmeldenummer: 15775693.3
(22) Anmeldetag: 06.10.2015
(51) Int. Cl.: G01B 21/04, B23Q 17/22, G05B 19/404

(54) **ERFASSUNG VON GEOMETRISCHEN ABWEICHUNGEN EINER BEWEGUNGSFÜHRUNG BEI EINEM KOORDINATENMESSGERÄT ODER EINER WERKZEUGMASCHINE**
DETECTING GEOMETRIC MOVEMENT GUIDANCE DEVIATIONS IN A COORDINATE MEASURING DEVICE OR A MACHINE TOOL
DÉTECTION D'ÉCARTS GÉOMÉTRIQUES D'UNE COMMANDE DE TRAJECTOIRE DANS UN APPAREIL DE MESURE DE COORDONNÉES OU DANS UNE MACHINE-OUTIL

(30) Priorität: 07.10.2014 DE 102014220313
(43) Veröffentlichungstag der Anmeldung: 08.11.2017
(73) Patentinhaber: Carl Zeiss Industrielle Messtechnik GmbH, 73447 Oberkochen (DE)
(72) Erfinder: WERNER, Elmar, 73447 Oberkochen (DE); FUCHS, Andreas, 73463 Westhausen (DE); BULLING, Dominic, 73569 Eschach (DE)
(74) Vertreter: Patentanwälte Bressel und Partner mbB
(86) Internationale Anmeldenummer: PCT/EP2015/073073
(87) Internationale Veröffentlichungsnummer: WO 2016/055494

(56) Entgegenhaltungen:
- EP-A2- 0 082 441
- DE-A1- 1 638 032
- DE-A1-102008 024 444

## Beschreibung

Die Erfindung betrifft ein Verfahren zur Erfassung von geometrischen Abweichungen einer realen Bewegungsführung von einer idealen Bewegungsführung bei einem Koordinatenmessgerät, das einen Sensor zur Vermessung eines Werkstücks aufweist, oder bei einer Werkzeugmaschine, die ein Werkzeug zur Bearbeitung eines Werkstücks aufweist, wobei das Koordinatenmessgerät oder die Werkzeugmaschine ein entlang der Bewegungsführung bewegliches Teil aufweist. Bei dem Teil kann es sich insbesondere um ein solches Teil handeln, bei dessen Bewegung der Sensor bzw. das Bearbeitungswerkzeug bewegt wird. Es kann sich alternativ aber um ein Teil handeln, das sich unabhängig von dem Sensor oder dem Bearbeitungswerkzeug bewegen lässt. Ein Beispiel ist ein Drehtisch, auf dem das zu vermessende bzw. zu bearbeitende Werkstück angeordnet ist. Die Erfindung betrifft ferner eine Anordnung zur Erfassung derartiger geometrischer Abweichungen bei einem Koordinatenmessgerät oder einer Werkzeugmaschine. Die Erfindung betrifft außerdem ein Koordinatenmessgerät oder eine Werkzeugmaschine mit der Anordnung. Bei der Bewegungsführung kann es sich z.B. um eine Linearführung zur Führung der Bewegung des Teils entlang einer geradlinigen Achse handeln. Alternativ kann es sich z.B. um eine Führung handeln, die die Bewegung des Teils um eine Drehachse führt.

Koordinatenmessgeräte (KMG) weisen typischerweise zumindest einen Sensor auf, der relativ zu einem zu vermessenden Werkstück beweglich ist. Bei dem Sensor kann es sich um einen Taster wie zum Beispiel einen Taststift handeln, mit dem das Werkstück unter Berührung, das heißt taktil angetastet wird. Der Sensor kann an einem Messkopf angeordnet sein, der entsprechend der taktilen Abtastung Messsignale liefert, aus denen insbesondere in Kombination mit aktuellen Positionen der beweglichen Teile des KMG die Koordinaten des abgetasteten Werkstücks berechnet werden. Der Sensor kann alternativ ein Taster vom schaltenden Typ sein. Bei dem Sensor kann es sich ferner alternativ um einen anderen Sensor handeln, zum Beispiel um einen optischen Sensor oder einen kapazitiven Sensor. Bei Werkzeugmaschinen ist zumindest ein Bearbeitungswerkzeug vorhanden, mit dem ein Werkstück bearbeitet werden kann.

Häufig ist der Sensor oder das Bearbeitungswerkzeug beweglich, so dass seine Position und/oder Ausrichtung relativ zu dem Werkstück einstellbar ist. Alternativ oder zusätzlich ist eine Halterung oder Auflage für das Werkstück beweglich, so dass seine Position und/oder Ausrichtung relativ zu dem Sensor oder Bearbeitungswerkzeug einstellbar ist. Beispiele sind in zwei senkrecht zueinanderstehenden geradlinigen Richtungen bewegliche Messtische (so genannte Kreuztische) und Drehtische. In allen diesen Fällen werden Bewegungsführungen mit dem Ziel verwendet, die Bewegung reproduzierbar entlang dem durch die jeweilige Bewegungsführung vorgegebenen Bewegungsweg auszuführen.

Führungsfehler der Bewegungsführung können insbesondere Fertigungsfehler der Bewegungsführung sein und/oder durch Verformungen der Bewegungsführung während des Betriebes verursacht werden. Führungsfehler können entsprechend den sechs Freiheitsgraden der Bewegung eines Körpers als lineare Führungsfehler bezüglich der drei Achsen eines kartesischen Koordinatensystems und als rotatorische Führungsfehler bezüglich dieser drei Achsen angegeben werden. Zur Messung dieser Komponenten des Führungsfehlers können ein oder mehrere Messverfahren und entsprechende Messeinrichtungen zum Einsatz kommen.

Aus DE 10 2012 207 388 A1 ist ein Verfahren zum Ermitteln von geometrischen Fehlern eines Koordinatenmessgeräts bekannt. Eine von dem KMG gehaltene Sensoranordnung nimmt Messwerte des geometrischen Fehlers auf, indem eine an dem beweglichen Messtisch des KMG angeordnete ebene Kalibrierfläche mit seitlichen Aufkantungen bewegt und vermessen wird. Auch die vorliegende Erfindung kann auf diese Weise aufgenommene Messwerte verwenden.

Zur Korrektur der Führungsfehler ist es bei Koordinatenmessgeräten (KMG) bekannt, das Verfahren der CAA (Computer Aided Accuracy) anzuwenden. Bei einer Kalibrierung werden Messwerte der geometrischen Abweichung der realen Bewegungsführung (d.h. in dem tatsächlichen Zustand der Bewegungsführung während der Kalibrierung) von einer idealen Bewegungsführung (d.h. der Bewegungsführung wie sie ohne Führungsfehler vorhanden wäre, zum Beispiel exakt geradlinig oder exakt kreislinienförmig) aufgenommen. Daraus werden entsprechende Korrekturwerte ermittelt und in einem Datenspeicher zur Korrektur bereitgestellt. Die Führungsfehleraufnahme erfolgt z.B. durch eine Messeinrichtung mit einem Laserinterferometer oder speziell bei Torsionsführungsfehlern durch eine Messeinrichtung mit elektronischen Neigungssensoren. Auch Kugel- und/oder Lochplatten oder andere Kalibriernormale, die insbesondere von dem Sensor des Koordinatenmessgeräts abgetastet werden, können zur Aufnahme der Führungsfehler benutzt werden. Zur Korrektur elastischer Biegeanteile der Führungen ist auch die sogenannte Flächen-CAA bekannt.

Das CAA-Korrekturmodell basiert auf der Annahme, dass die Führungsfehler langzeitstabil, d.h. zum Zeitpunkt der Fehleraufnahme und zum Zeitpunkt der Werkstückmessung gleich sind, wobei zwischen diesen Zeitpunkten mehrere Monate oder Jahre liegen können.

Bei Koordinatenmessgeräten und Werkzeugmaschinen ergeben sich Führungsveränderungen aber auch im Laufe der Zeit, zum Beispiel durch Fundamentsetzungseffekte, und während des Betriebes, zum Beispiel durch Gewichtskräfte des Werkstücks oder durch Temperaturänderungen. Diese Effekte sind zeitabhängig und nicht langzeitstabil wie die durch CAA korrigierten Führungsfehler. Sie werden als dynamische Führungsveränderungen oder dynamische Führungsfehler bezeichnet. Es besteht daher ein Bedarf für eine Wiederholung oder zumindest eine Überprüfung der Kalibrierung. Der Aufwand dafür sollte gering sein, da andernfalls weniger Zeit für den Betrieb des Geräts oder der Maschine verbleibt.

In DE 10 2008 024 444 A1 wird ein Verfahren zum Kalibrieren eines Koordinatenmessgeräts offenbart. Hierbei wird ein Referenzkörper in dem durch das Koordinatenmessgerät definierten Messvolumen relativ zu einer zu kalibrierenden Koordinatenachse des Koordinatenmessgeräts angeordnet. Des Weiteren wird eine Abtastvorrichtung an dem Messkopf, der entlang von zumindest einer Koordinatenachse in dem Messvolumen verfahrbar ist, angeordnet. Die Abtastvorrichtung verfügt über wenigstens ein Tastelement, mit dem der Referenzkörper abtastbar ist. Anschließend werden mit dem wenigstens einen Tastelement an einer Vielzahl von Messpunkten des Referenzkörpers Abtastwerte bestimmt. Die Messpunkte sind dabei entlang einer Achse angeordnet, die im Wesentlichen parallel zu der Längsachse des Referenzkörpers verläuft. Außerdem werden vorbestimmte, den Messpunkten zugeordnete Körperfehlerwerte, die die Beschaffenheit des Referenzkörpers an dem jeweiligen Messpunkt beschreiben, bereitgestellt. In Abhängigkeit der Abtastwerte und der bereitgestellten Körperfehlerwerte werden dann die Achsfehlerwerte, die die Beschaffenheit der zu kalibrierenden Koordinatenachse an dem jeweiligen Messpunkt beschreiben, bestimmt.

In EP 0 082 441 A2 werden zwei Verfahren zur Beseitigung des Einflusses von Führungsfehlern auf die Genauigkeit der Positionsbestimmung von geführten Maschinenteilen vorgestellt, wobei das Messergebnis mit einer führungsfehlerabhängigen Korrektur versehen wird.

DE 16 38 032 A1 beschreibt ein Verfahren zur Fehlerverminderung bei einer Vorrichtung zum Positionieren eines angetriebenen Teiles gegenüber einem Bezugsteil, zu welcher ein Rechner gehört zum Umwandeln von Eingabebefehlen in Ausgangsbefehle mit zu den Stellungen, in die das angetriebene Seil bewegt werden soll, in Beziehung stehenden unabhängigen Variablen, wobei in eine dem Rechner zugeordnete Speichervorrichtung eine Tabelle von Fehlerwerten gegenüber Bezugsstellungen eingespeichert wird, worauf der Rechner nach einem solchen Programm arbeitet, wobei, wenn das angetriebene Teil in Auswirkung der dem Rechner zugeführten Eingangsbefehle zu verschiedenen Stellen seines Bewegungsfeldes bewegt wird, die Speichervorrichtung abgefragt wird und diesen Stellen entsprechende Fehlerwerte aus ihr extrahiert und zum Korrigieren der Ausgangsbefehle verwendet werden.

Es ist eine Aufgabe der vorliegenden Erfindung, ein Verfahren zur Erfassung von geometrischen Abweichungen zumindest einer Bewegungsführung bei einem Koordinatenmessgerät oder einer Werkzeugmaschine anzugeben, das bei geringem Zeitaufwand eine genaue Erfassung der geometrischen Abweichungen ermöglicht. Es ist ferner eine Aufgabe der vorliegenden Erfindung, eine Anordnung zur Ausführung des Verfahrens anzugeben. Ferner ist es eine Aufgabe der vorliegenden Erfindung, eine Werkzeugmaschine oder ein Koordinatenmessgerät mit der Anordnung anzugeben.

Die Erfindung umfasst ein Verfahren gemäß Anspruch 1 und eine Anordnung gemäß Anspruch 8.

Die Erfindung geht davon aus, dass bei der Messung der geometrischen Abweichung zwischen der real vorhandenen Bewegungsführung und der idealen Bewegungsführung Hysterese-Effekte auftreten und/oder die Temperatur oder Temperaturverteilung Einfluss auf die gemessenen geometrischen Abweichungen hat. Insbesondere Antriebe, die die Bewegung des beweglichen Teils antreiben, führen zu einer Hysterese der gemessenen geometrischen Abweichungen, da die geometrische Abweichung davon abhängig ist, in welche Richtung das bewegliche Teil entlang der Bewegungsführung bewegt wird. Wenn sich die Temperatur entlang der Bewegungsführung ändert und das bewegliche Teil somit während der Bewegung entlang der Bewegungsführung seine Temperatur ändert, tritt aufgrund der thermischen Trägheit des beweglichen Teils eine Hysterese der gemessenen geometrischen Abweichungen auf. Bei Bewegung des beweglichen Teils in einer Vorwärtsrichtung entlang der Bewegungsführung steigt z.B. die Temperatur an und bei der Bewegung in der umgekehrten Rückwärtsrichtung nimmt die Temperatur des Teils ab. Aufgrund der thermischen Trägheit ist die Temperatur des Teils daher an derselben Position entlang der Bewegungsführung bei der Bewegung in Vorwärtsrichtung und Rückwärtsrichtung verschieden. Wenn sich die Temperatur im Laufe der Zeit ändert, kann durch die Erfassung der geometrischen Abweichungen jeweils bei Bewegung des Teils in Vorwärtsrichtung und in Rückwärtsrichtung ein (z. B. arithmetischer) Mittelwert bestimmt werden. Die Mittelwertbildung ist aber auch aufgrund der Hysterese zweckmäßig.

Das erfindungsgemäße Verfahren verarbeitet daher Messwerte bei Bewegung des beweglichen Teils in der Vorwärtsrichtung und danach bei Bewegung des beweglichen Teils in der entgegengesetzten Rückwärtsrichtung. Insbesondere wird das bewegliche Teil bei der Bewegung in der jeweiligen Richtung immer wieder angehalten und an der jeweiligen Position zumindest ein Messwert der geometrischen Abweichung aufgenommen. Durch das Stoppen der Bewegung und vorzugsweise nachdem eine Zeitspanne des Abwartens verstrichen ist, bevor der zumindest eine Messwert der geometrischen Abweichung aufgenommen wird, kann die Genauigkeit bei der Bestimmung der geometrischen Abweichung erheblich gesteigert werden. Durch das Abwarten verringert sich die Amplitude von etwaig aufgetretenen mechanischen Schwingungen erheblich. Auch hat das bewegliche Teil während des Abwartens Zeit, seine Temperatur an die örtliche Temperatur der Bewegungsführung anzupassen bzw. umgekehrt.

Zur Aufnahme der Messwerte der geometrischen Abweichung an einer Vielzahl von Positionen entlang der Bewegungsführung wird daher aus zumindest einem Grund erhebliche Zeit benötigt: Aufgrund von Hysterese-Effekten wird das bewegliche Teil in Vorwärtsrichtung und in Rückwärtsrichtung bewegt und jeweils an einer Vielzahl von Positionen die geometrische Abweichung bestimmt. Vorzugsweise wird ferner an den einzelnen Positionen eine Zeitspanne abgewartet, bis die geometrische Abweichung aufgenommen wird.

Um den Mittelwert der geometrischen Abweichung jeweils an bestimmten Positionen des beweglichen Teils entlang der Bewegungsführung zu ermitteln, können im einfachsten Fall die Messwerte der geometrischen Abweichungen an denselben Positionen sowohl bei Vorwärtsbewegung als auch bei Rückwärtsbewegung aufgenommen werden. Es liegen dann Messwerte aus dem Vorgang der Vorwärtsbewegung und der Rückwärtsbewegung für dieselben Positionen entlang der Bewegungsführung vor. Der Mittelwert ist z.B. der arithmetische Mittelwert. Für diese Vorgehensweise bei der Aufnahme der geometrischen Abweichungen wird jedoch viel Zeit benötigt.

Um Zeit zu sparen und/oder die Genauigkeit der Ermittlung der geometrischen Abweichungen zu erhöhen, wird vorgeschlagen, bei der Vorwärtsbewegung und/oder bei der Rückwärtsbewegung an einer Zwischenposition, die zwischen zwei Messpositionen liegt, keinen Messwert der geometrischen Abweichung aufzunehmen, wobei an dieser Zwischenposition bei der Bewegung in der entgegengesetzten Richtung zumindest ein Messwert der geometrischen Abweichung aufgenommen wird. Z.B. wird daher an einer ersten Zwischenposition während des Vorgangs der Bewegung des beweglichen Teils in der Vorwärtsrichtung kein Messwert aufgenommen, jedoch bei der Bewegung des Teils in der entgegengesetzten Rückwärtsrichtung wird an der ersten Zwischenposition ein Messwert aufgenommen. Vorzugsweise gibt es sowohl bei der Vorwärtsbewegung als auch bei der Rückwärtsbewegung jeweils eine Mehrzahl von Zwischenpositionen, an denen kein Messwert aufgenommen wird. Es gibt somit bei der Vorwärtsbewegung eine Mehrzahl von ersten Zwischenpositionen, an denen kein Messwert aufgenommen wird, wobei jedoch an diesen ersten Zwischenpositionen bei der Rückwärtsbewegung jeweils zumindest ein Messwert der geometrischen Abweichung aufgenommen wird. Umgekehrt gibt es bei der Bewegung in der Rückwärtsrichtung eine Mehrzahl von zweiten Zwischenpositionen, an denen kein Messwert aufgenommen wird, wobei jedoch bei der Vorwärtsbewegung an den zweiten Zwischenpositionen zumindest ein Messwert aufgenommen wurde. Vorzugsweise folgt im Verlauf der Bewegungsführung auf eine erste Zwischenposition eine zweite Zwischenposition, bevor wieder eine erste Zwischenposition erreicht wird usw. Die ersten und zweiten Zwischenpositionen folgen daher alternierend aufeinander. Andere Verteilungen der ersten und zweiten Zwischenpositionen sind jedoch möglich.

Wenn an der jeweiligen Zwischenposition in der umgekehrten Bewegungsrichtung jeweils ein Messwert aufgenommen wird/wurde, gilt dies alternativ oder zusätzlich für die ersten Messpositionen bei Bewegung in Vorwärtsrichtung und die zweiten Messpositionen bei Bewegung in Rückwärtsrichtung. In diesem Fall folgen auch die ersten und zweiten Messpositionen im Verlauf der Bewegungsführung alternierend aufeinander. Dies ist jedoch nur eine bevorzugte Ausführungsform. Es ist z.B. auch möglich, dass im Verlauf der Bewegungsführung jeweils auf zwei erste Messpositionen zwei zweite Messpositionen folgen und darauf wieder zwei erste Messpositionen usw. Alternativ kann z. B. auf jeweils zwei erste Messpositionen eine zweite Messposition folgen und darauf wieder zwei erste Messpositionen usw. oder kann auf zwei zweite Messpositionen eine erste Messposition folgen und darauf wieder zwei zweite Messpositionen usw.

In all diesen Fällen ist aber zumindest eine Zwischenposition vorhanden und daher zumindest ein Messwert an dieser Position lediglich aus dem Vorgang der Bewegung des beweglichen Teils in der entgegengesetzten Richtung vorhanden. Die Erfindung beruht dabei auf der Erkenntnis, dass auch an den Zwischenpositionen und/oder im Bereich um die Zwischenpositionen ein (insbesondere arithmetischer) Mittelwert der geometrischen Abweichung zwischen dem Vorgang der Vorwärtsbewegung und der Rückwärtsbewegung ermittelt werden kann. Um Zeit bei der Aufnahme der Messwerte zu sparen, können daher z.B. Messungen der geometrischen Abweichung in der Vorwärtsrichtung und/oder der Rückwärtsrichtung ausgelassen werden, die bei der oben erwähnten einfachsten Vorgehensweise nicht ausgelassen werden. Alternativ kann die Genauigkeit bei der Erfassung der geometrischen Abweichungen gesteigert werden, indem in Vorwärtsrichtung und/oder in Rückwärtsrichtung an zusätzlichen Messpositionen im Vergleich zu der einfachsten Vorgehensweise jeweils zumindest ein Messwert der geometrischen Abweichung aufgenommen wird. Diese beiden Möglichkeiten können auch miteinander kombiniert werden. Gegenüber der einfachsten Vorgehensweise kann daher die durchschnittliche Schrittweite zwischen ersten Messpositionen bei Vorwärtsbewegung und die durchschnittliche Schrittweite der zweiten Messpositionen bei Rückwärtsbewegung vergrößert werden und dennoch die Genauigkeit bei der Erfassung der geometrischen Abweichungen gesteigert werden.

Die ersten Messpositionen aus dem Vorgang der Bewegung in Vorwärtsrichtung und die zweiten Messpositionen aus dem Vorgang der Bewegung in Rückwärtsrichtung sind insbesondere jeweils Stützstellen eines Verlaufs der Messwerte der geometrischen Abweichung. Der Verlauf kann jeweils durch eine mathematische Funktion der an den Messpositionen aufgenommenen Messwerte in Abhängigkeit vom Ort, nämlich der Position entlang der Bewegungsführung, ausgedrückt werden. Die Aufnahme der Messwerte in Vorwärtsrichtung ergibt daher einen ersten Verlauf der Messwerte bzw. eine erste mathematische Funktion und die Aufnahme der Messwerte in Rückwärtsrichtung ergibt einen zweiten Verlauf bzw. eine zweite mathematische Funktion. Wenn an den Messpositionen nicht nur jeweils ein Messwert, sondern eine Mehrzahl von Messwerten aufgenommen wird, die z.B. Messinformation bezüglich unterschiedlicher Freiheitsgrade (siehe oben) der geometrischen Abweichung enthalten, dann wird dementsprechend eine Mehrzahl von Verläufen bzw. mathematischen Funktionen erhalten, insbesondere jeweils ein Verlauf bezüglich eines der Freiheitsgrade. Z.B. wird jeweils bei Vorwärtsbewegung und bei Rückwärtsbewegung ein Verlauf der geometrischen Abweichung bezüglich einer ersten Richtung quer zum Verlauf der Bewegungsführung erhalten und ein Verlauf der geometrischen Abweichung bezüglich einer zweiten Richtung quer zur Richtung der Bewegungsführung erhalten, wobei die erste Richtung und die zweite Richtung insbesondere senkrecht zueinander verlaufen.

Bei der Bildung von Mittelwerten der geometrischen Abweichung des Verlaufs in Vorwärtsrichtung und des Verlaufs in Rückwärtsrichtung wird im Allgemeinen lediglich der Mittelwert bezüglich desselben Freiheitsgrades der geometrischen Abweichung gebildet. Dies ist jedoch nicht zwangsläufig der Fall. Z.B. kann aus den Messwerten für mehrere Freiheitsgrade jeweils separat für die Vorwärtsrichtung und die Rückwärtsrichtung ein Modell der geometrischen Abweichung berechnet werden und dann der Mittelwert zwischen den Modellen berechnet werden.

In all diesen Fällen wird bevorzugt, dass aus dem Verlauf der geometrischen Abweichung bei Bewegung in Vorwärtsrichtung und dem Verlauf der geometrischen Abweichung bei Bewegung in Rückwärtsrichtung (und optional auch aus zumindest einem weiteren Verlauf der geometrischen Abweichung bei Bewegung in Vorwärtsrichtung oder Rückwärtsrichtung) ein Verlauf der Mittelwerte der geometrischen Abweichung berechnet wird. Da es zumindest eine erste Zwischenposition in dem Verlauf bezüglich der Vorwärtsrichtung und/oder zumindest eine zweite Zwischenposition in dem Verlauf bezüglich der Rückwärtsrichtung gibt, an der kein Messwert aufgenommen wurde, kann der Verlauf zumindest an der Zwischenposition und/oder in dem Bereich der Zwischenposition auf einer Interpolation der Messwerte an benachbarten Messpositionen des Verlaufs beruhen. Im einfachsten Fall kann es sich dabei um eine lineare Interpolation handeln. Alternativ können andere übliche Verfahren der Interpolation angewendet werden, die aus der Mathematik oder Physik bekannt sind.

Ferner ist es optional möglich, nicht nur einen Vorgang der Bewegung des beweglichen Teils in der Vorwärtsrichtung und/oder der Rückwärtsrichtung auszuführen, sondern mehrere solche Vorgänge, und jeweils an Messpositionen zumindest einen Messwert der geometrischen Abweichung aufzunehmen. Im Ergebnis liegen daher für die Vorwärtsrichtung und/oder die Rückwärtsrichtung mehrere Verläufe der geometrischen Abweichung entlang der Bewegungsführung vor. Aus diesen mehreren Verläufen für die jeweilige Bewegungsrichtung und aus zumindest einem Verlauf für die entgegengesetzte Bewegungsrichtung kann dann der Verlauf der Mittelwerte der geometrischen Abweichung berechnet werden. Dabei wird bevorzugt, dass die Messpositionen der verschiedenen Verläufe bezüglich derselben Bewegungsrichtung nicht identisch sind. Vielmehr existiert in zumindest einem der Verläufe eine Zwischenposition, an der kein Messwert aufgenommen wurde, an der jedoch für einen anderen der Verläufe bezüglich derselben Bewegungsrichtung ein Messwert aufgenommen wurde. Für die Möglichkeiten, Messpositionen und Zwischenpositionen der Verläufe bezüglich derselben Bewegungsrichtung zu wählen, gilt insbesondere das Gleiche wie zuvor für die Zwischenpositionen und Messpositionen bezüglich der einander entgegengesetzten Bewegungsrichtungen bereits beschrieben wurde oder wie noch beschrieben wird.

Vorzugsweise werden die genannten Mittelwerte oder wird der genannte Verlauf der Mittelwerte als Korrekturinformation zur Korrektur der geometrischen Abweichung ausgegeben und insbesondere in einem Datenspeicher als Information für eine CAA gespeichert. Insbesondere kann die Steuerung eines Koordinatenmessgerätes oder einer Werkzeugmaschine auf diese Mittelwerte oder den Verlauf der Mittelwerte zugreifen und die geometrische Abweichung in an sich bekannter Weise korrigieren.

Insbesondere können die Verarbeitungsschritte der Interpolation und/oder Bildung der Mittelwerte durch ein Computerprogramm ausgeführt werden. Optional läuft das Computerprogramm in einem Rechner der Steuerung oder einer separaten Auswertungseinrichtung ab.

Insbesondere wird vorgeschlagen: Ein Verfahren zur Erfassung von geometrischen Abweichungen einer realen Bewegungsführung von einer idealen Bewegungsführung bei einem Koordinatenmessgerät, das einen Sensor zur Vermessung eines Werkstücks aufweist, oder bei einer Werkzeugmaschine, die ein Werkzeug zur Bearbeitung eines Werkstücks aufweist, wobei das Koordinatenmessgerät oder die Werkzeugmaschine ein entlang der Bewegungsführung und von der Bewegungsführung geführtes bewegliches Teil aufweist, wobei
- das bewegliche Teil in einer Vorwärtsrichtung entlang der Bewegungsführung bewegt wird und an einer Mehrzahl von ersten Positionen des beweglichen Teils bezüglich der Bewegungsführung jeweils ein Messwert der geometrischen Abweichung aufgenommen wird, so dass eine erste Gruppe von Messwerten aufgenommen wird,
- das bewegliche Teil in einer Rückwärtsrichtung, die entgegengesetzt zu der Vorwärtsrichtung verläuft, entlang der Bewegungsführung bewegt wird und an einer Mehrzahl von zweiten Positionen des beweglichen Teils bezüglich der Bewegungsführung jeweils ein Messwert der geometrischen Abweichung aufgenommen wird, so dass eine zweite Gruppe von Messwerten aufgenommen wird,
- bei der Aufnahme der ersten Gruppe von Messwerten kein Messwert an zumindest einer ersten Zwischenposition aufgenommen wird, die zwischen zwei der ersten Positionen an einer der zweiten Positionen liegt, und/oder wobei bei der Aufnahme der zweiten Gruppe von Messwerten kein Messwert an zumindest einer zweiten Zwischenposition aufgenommen wird, die zwischen zwei der zweiten Positionen an einer der ersten Positionen liegt,
- für jede erste Position und für jede zweite Position aus dem Verlauf der ersten Gruppe von Messwerten entlang der Bewegungsführung und aus dem Verlauf der zweiten Gruppe von Messwerten entlang der Bewegungsführung ein Mittelwert der geometrischen Abweichung der Bewegungsführung berechnet wird und auf diese Weise eine Gruppe von Mittelwerten gebildet wird, die die Mittelwerte der geometrischen Abweichungen bei Bewegung des beweglichen Teils in der Vorwärtsrichtung und der Rückwärtsrichtung sind.

Ferner wird eine Anordnung vorgeschlagen zur Erfassung von geometrischen Abweichungen einer realen Bewegungsführung von einer idealen Bewegungsführung bei einem Koordinatenmessgerät, das einen Sensor zur Vermessung eines Werkstücks aufweist, oder bei einer Werkzeugmaschine, die ein Werkzeug zur Bearbeitung eines Werkstücks aufweist, wobei die Anordnung zur Ausführung des Verfahrens in einer der beschriebenen Ausgestaltungen eine Messeinrichtung und eine Erfassungseinrichtung aufweist, wobei die Messeinrichtung ausgestaltet ist, zumindest die erste Gruppe und die zweite Gruppe von Messwerten aufzunehmen, und die Erfassungseinrichtung ausgestaltet ist, die Gruppe von Mittelwerten zu bilden und dadurch die geometrischen Abweichungen zu erfassen.

Außerdem wird ein Koordinatenmessgerät oder eine Werkzeugmaschine vorgeschlagen mit der Anordnung und mit einer Steuerung, die ausgestaltet ist, eine Bewegung des beweglichen Teils in der Vorwärtsrichtung und der Rückwärtsrichtung entlang der Bewegungsführung zu steuern und die ersten und zweiten Positionen an die Erfassungseinrichtung auszugeben.

Die Berechnung des Mittelwertes der geometrischen Abweichung für jede erste Position und für jede zweite Position wird vorzugsweise so durchgeführt, dass an jeder ersten Position und an jeder zweiten Position ein (zum Beispiel arithmetischer) Mittelwert gebildet wird. Wenn an einer der ersten Positionen oder an einer der zweiten Positionen eine Zwischenposition des Verlaufs der geometrischen Abweichung aus dem Vorgang der Bewegung in der entgegengesetzten Bewegungsrichtung liegt, wird vorzugsweise eine Interpolation durchgeführt. Hierzu bestehen verschiedene Möglichkeiten. Im einfachsten Fall wird wie oben erwähnt der Verlauf der Messwerte, der die Zwischenposition aufweist, interpoliert und dann der Mittelwert gebildet. Der Mittelwert kann jedoch alternativ z.B. direkt aus Messwerten der geometrischen Abweichung ohne vorherige Berechnung eines interpolierten Wertes erhalten werden. In diesem Fall werden z.B. die Messwerte, die der Zwischenposition benachbart liegen, schwächer gewichtet als der Messwert an der Zwischenposition. Dieses Prinzip der schwächeren Gewichtung betrifft die einzelnen benachbarten Messwerte. Insgesamt gehen die benachbarten Messwerte aber vorzugsweise mit demselben Gewicht in die Mittelwertberechnung ein wie der Messwert an der Position. Auf noch eine weitere Möglichkeit der Interpolation durch vorhergehende Glättung einer Differenz zwischen den Verläufen in Vorwärtsrichtung und Rückwärtsrichtung wird noch eingegangen.

Außer den bereits genannten Vorteilen hat das Prinzip der Aufnahme von Messwertverläufen mit Zwischenpositionen noch einen weiteren Vorteil, der mit dem Vorteil der geringeren Messzeit zusammenhängt: Da weniger Zeit benötigt wird, können sich zeitliche Temperaturschwankungen in geringerem Maße auf die Genauigkeit der Mittelwertbildung auswirken.

Insbesondere kann das bewegliche Teil wiederholt in der Vorwärtsrichtung und/oder in der Rückwärtsrichtung entlang der Bewegungsführung bewegt werden und kann an einer Mehrzahl von dritten Positionen bezüglich der Bewegung des beweglichen Teils in der Vorwärtsrichtung und/oder an einer Mehrzahl von vierten Positionen bezüglich der Bewegung des beweglichen Teils in der Rückwärtsrichtung und jeweils bezüglich der Bewegungsführung ein Messwert der geometrischen Abweichung aufgenommen wird, so dass eine dritte und/oder vierte Gruppe von Messwerten aufgenommen wird, und wobei die Gruppe von Mittelwerten (und vorzugsweise auch deren Verlauf entlang der Bewegungsführung) auch abhängig von dem Verlauf der dritten und/oder vierten Gruppe von Messwerten gebildet wird.

Auf Aspekte der Wiederholung des Vorgangs der Bewegung des beweglichen Teils in der Vorwärtsrichtung und/oder Rückwärtsrichtung und Aufnahme von mehreren Verläufen der geometrischen Abweichung bezüglich derselben Bewegungsrichtung wurde bereits eingegangen. Durch die Bildung der Mittelwerte werden insbesondere zufällige (nicht systematische) Fehler bei der Messwertaufnahme ausgemittelt.

Vorzugsweise wird bei der Aufnahme der dritten Gruppe von Messwerten kein Messwert an zumindest einer dritten Zwischenposition aufgenommen, die zwischen zwei der dritten Positionen an einer der ersten Positionen liegt, und/oder wird bei der Aufnahme der vierten Gruppe von Messwerten kein Messwert an zumindest einer vierten Zwischenposition aufgenommen, die zwischen zwei der vierten Positionen an einer der zweiten Positionen liegt. Auf diese Weise wird auch bezüglich der Aufnahme der Verläufe bezüglich derselben Bewegungsrichtung Zeit gespart und/oder die Genauigkeit gesteigert.

Insbesondere kann zwischen jeweils zwei von mehreren Positionen zumindest einer der Gruppen von Messwerten eine konstant große Schrittweite liegen, wobei bei einer Hälfte der konstant großen Schrittweite jeweils eine der Zwischenpositionen liegt. Bei den genannten Positionen der Gruppe von Messwerten handelt es sich um die Messpositionen. Die Zwischenpositionen liegen somit jeweils in der Mitte zwischen zwei benachbarten Messpositionen. Bevorzugt wird, dass auch die Messpositionen der anderen Gruppen von Messwerten dieselbe konstant große Schrittweite haben, wobei die Messpositionen und Zwischenpositionen der verschiedenen Gruppen wie oben beschrieben jeweils alternierend angeordnet sind. Bezüglich der ersten und der zweiten Gruppe von Messwerten bedeutet dies, dass auf eine erste Messposition eine erste Zwischenposition folgt, die gleich einer der zweiten Messpositionen ist und darauf wieder eine erste Messposition folgt, die gleich einer der zweiten Zwischenpositionen ist, usw. Vorzugsweise gilt das Prinzip der konstant großen Schrittweite und optional auch der alternierenden Anordnung von Messpositionen und Zwischenpositionen für alle Messpositionen der Gruppen bzw. Verläufe von Messwerten, wobei jedoch die Positionen an den Enden der Verläufe davon ausgenommen sein können. Vorzugsweise sind die Randpositionen (die durch die Start- und Endpositionen der Verläufe gebildet werden) der verschiedenen Verläufe gleich und sind die Randpositionen jedes der Verläufe Messpositionen. Bei zumindest einem der Verläufe folgt daher auf die Randposition eine Messposition, bevor eine Zwischenposition folgt. Bei zumindest einem anderen der Verläufe folgt daher auf die Randposition eine Zwischenposition und darauf eine Messposition. Alternativ zu Messwerten an den Randpositionen in allen Verläufen kann zumindest für einen der Verläufe ähnlich wie bei einer Zwischenposition kein Messwert aufgenommen werden. Um für die Weiterverarbeitung und insbesondere für die Mittelwertbildung an dieser Position einen Wert zur Verfügung zu haben, kann eine Extrapolation des Verlaufs vorgenommen werden.

Gemäß einer bevorzugten Ausführungsform wird ein geglätteter Verlauf von Differenzen der Verläufe der ersten Gruppe und der zweiten Gruppe entlang der Bewegungsführung berechnet, wobei die Gruppe von Mittelwerten aus Werten des geglätteten Verlaufs von Differenzen gebildet wird.

Insbesondere kann der geglättete Verlauf von Differenzen unmittelbar zur Bildung des Verlaufs der Mittelwerte verwendet werden. Der geglättete Verlauf von Differenzen hat zumindest an einigen der Messpositionen der ersten Gruppe und der zweiten Gruppe oder im Bereich dieser Messpositionen durch die Glättung erhaltene Werte für die Differenz zwischen dem Verlauf der ersten Gruppe und dem Verlauf der zweiten Gruppe von Messwerten. Zumindest an diesen Stützstellen kann der zugeordnete Mittelwert zwischen den Verläufen der ersten und zweiten Gruppe (und optional weiterer Gruppen, siehe oben) auf einfache Weise dadurch berechnet werden, dass der Mittelwert jeweils bei der Hälfte der Werte des geglätteten Verlaufs von Differenzen liegt.

Der geglättete Verlauf von Differenzen und insbesondere die genannten Stützstellen kann/können jedoch auch auf andere Weise zur Bildung der Gruppe von Mittelwerten genutzt werden. Wenn mehr als ein Verlauf von Messwerten bezüglich zumindest einer der Bewegungsrichtungen vorhanden ist, gibt es mehrere Möglichkeiten der Bildung des geglätteten Verlaufs von Differenzen. Z.B. kann aus den verschiedenen Verläufen bezüglich derselben Bewegungsrichtung zunächst ein gemittelter Verlauf bezüglich dieser Bewegungsrichtung berechnet werden. Der resultierende gemittelte Verlauf kann dann wie ein einziger gemessener Verlauf verwendet werden. Alternativ kann für verschiedene Paare von Verläufen bezüglich der Vorwärtsrichtung und der Rückwärtsrichtung (z.B. für die erste Gruppe und die zweite Gruppe separat und für die dritte und vierte Gruppe wiederum separat) jeweils ein Verlauf von Differenzen oder ein geglätteter Verlauf von Differenzen der Verläufe gebildet werden. Wenn zunächst jeweils ein noch nicht geglätteter Verlauf von Differenzen gebildet wird, können diese Verläufe entweder zunächst separat geglättet werden und dann z.B. ein Mittelwert der geglätteten Verläufe gebildet werden oder es kann zunächst ein Mittelwert der Verläufe gebildet werden, der dann geglättet wird. Es ist jedoch nicht zwingend, dass der geglättete Verlauf von Differenzen dadurch gebildet wird, dass zunächst ein nicht geglätteter Verlauf von Differenzen gebildet wird. Vielmehr ist es auch möglich, dass die Verläufe der ersten Gruppe und der zweiten Gruppe (und optional weiterer Gruppen) oder die entsprechenden gemittelten Verläufe bei mehrfacher Vorwärtsbewegung und Rückwärtsbewegung zunächst geglättet werden und dann die Differenz der geglätteten Verläufe als geglätteter Verlauf von Differenzen gebildet wird.

Die Glättung eines Verlaufs von Messwerten, Mittelwerten oder Differenzen kann mit den üblichen in der Mathematik oder Statistik bekannten Verfahren vorgenommen werden. Z.B. kann ein gleitender Gaußscher Filter auf den Verlauf angewendet werden. Alternativ kann eine Polynomfunktion oder können Splines in den zu glättenden Verlauf gefittet werden.

Bevorzugt wird, dass zunächst durch Berechnung von Differenzen der Verläufe der ersten Gruppe und der zweiten Gruppe ein Verlauf der Differenzen entlang der Bewegungsführung gebildet wird und dann der geglättete Verlauf von Differenzen durch Glättung des Verlaufs der Differenzen gebildet wird. Entsprechendes gilt, wenn für die einzelnen Bewegungsrichtungen jeweils mehrere Verläufe von Messwerten bzw. Gruppen vorhanden sind. Insbesondere wie oben bereits beschrieben kann dann auf verschiedene Weise zunächst ein Verlauf der Differenzen gebildet werden und dann der Verlauf geglättet werden.

Im Folgenden wird eine bevorzugte Weise der Bildung von interpolierten Werten an Zwischenpositionen beschrieben. Dabei wird der geglättete Verlauf von Differenzen verwendet. Auf diese Weise werden die Vorteile der Glättung, nämlich der Ausgleich von zufälligen Fehlern bei der Messung, und der in den Verläufen vorhandenen Messpositionen, nämlich der Erhalt der Messinformationen, kombiniert. Im Ergebnis wird die benötigte Interpolation an den Zwischenpositionen erhalten. Es wird daher vorgeschlagen, an der jeweiligen Zwischenposition einer Gruppe von Messwerten (z. B. der ersten Gruppe oder dritten Gruppe oder einer Gruppe mit Mittelwerten dieser Gruppen) einen interpolierten Wert des Verlaufs der Gruppe von Messwerten zu bilden, indem an der Zwischenposition der Wert (insbesondere Messwert) einer anderen Gruppe (z. B. der zweiten Gruppe oder vierten Gruppe oder einer Gruppe mit Mittelwerten dieser Gruppen) um den Betrag des geglätteten Verlaufs von Differenzen an der Zwischenposition versetzt wird. Der Versatz wird selbstverständlich von dem Verlauf bzw. dem Wert der anderen Gruppe in Richtung des Verlaufs der Gruppe vorgenommen, an deren Zwischenposition der interpolierte Wert zu bilden ist.

Die zuvor beschriebene Weise der Bildung interpolierter Werte schließt nicht aus, dass in einem vorangegangenen Schritt, insbesondere zum Zweck der Bildung der Differenz der Verläufe, bereits auf andere Weise interpolierte Werte an den Zwischenpositionen gebildet wurden. Es wird jedoch bevorzugt, dass aus den interpolierten Werten, die unter Verwendung des geglätteten Verlaufs von Differenzen gebildet wurden, der Verlauf der Mittelwerte berechnet wird.

Im Folgenden werden Ausführungsbeispiele der Erfindung unter Bezugnahme auf die beiliegende Zeichnung beschrieben. Es zeigen:
- Fig. 1: zwei nicht gemäß dem erfindungsgemäßen Verfahren gewonnene Verläufe für die geometrische Abweichung einer Führung für Vorwärts- und Rückwärtsrichtung sowie einen Verlauf von Mittelwerten aus den beiden Verläufen,
- Fig. 2: Verläufe für die geometrische Abweichung einer Führung für Vorwärts- und Rückwärtsrichtung des beweglich Teils entlang der Führung, einen Verlauf von Mittelwerten aus den Verläufen und als Referenz einen Verlauf von Mittelwerten, der dann entstanden wäre, wenn auch an den Zwischenpositionen Messwerte aufgenommen worden wäre,
- Fig. 3: Verläufe für die geometrische Abweichung einer Führung für eine erste Vorwärts- und Rückwärtsbewegung sowie für eine zweite Vorwärts- und Rückwärtsbewegung des beweglichen Teils entlang der Führung, einen Verlauf von Mittelwerten aus den Verläufen und den Referenzverlauf aus Fig. 2,
- Fig. 4: Verläufe für die geometrische Abweichung einer Führung für eine Vorwärts- und Rückwärtsbewegung des beweglichen Teils entlang der Führung, einen Verlauf von Differenzwerten der Verläufe, einen geglätteten Verlauf von Differenzwerten, einen Verlauf von Mittelwerten aus den Verläufen und den Referenzverlauf aus Fig. 2,
- Fig. 5: ein Koordinatenmessgerät mit einem Kreuztisch und einer in vertikaler Richtung verfahrbaren Halterung zum Halten eines Tasters oder einer Sensoranordnung.

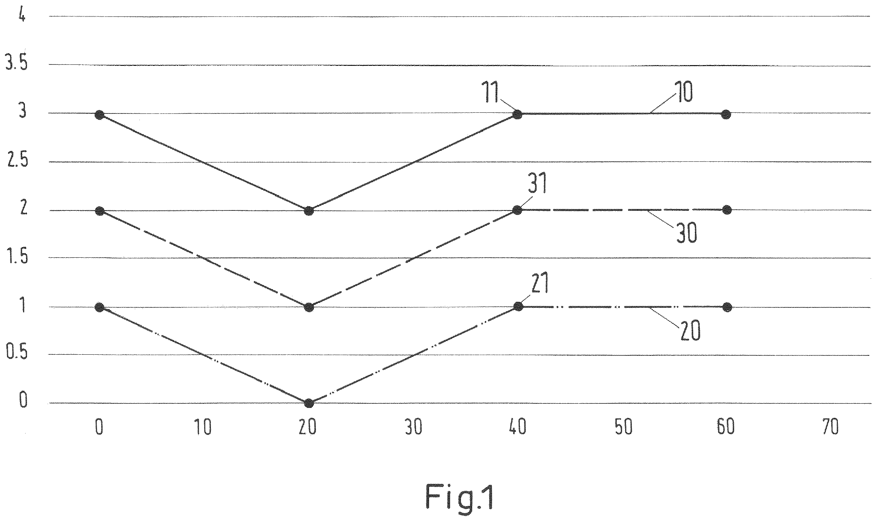

Fig. 1 zeigt ein Beispiel für gemessene Verläufe (unten Vorwärtsrichtung, oben Rückwärtsrichtung), bei denen an allen Messpositionen bezüglich der Bewegungsführung (im Beispiel lediglich vier Messpositionen) Messwerte der geometrischen Abweichung sowohl bei Bewegung in Vorwärtsrichtung als auch bei Bewegung in Rückwärtsrichtung aufgenommen wurden. Im Gegensatz zu dem Verfahren der vorliegenden Erfindung existieren daher keine Zwischenpositionen, an denen lediglich für eine Bewegungsrichtung Messwerte aufgenommen wurden. Zwischen den gemessenen Verläufen befindet sich der Verlauf des arithmetischen Mittelwertes der Messwerte. Entlang der horizontalen Achse des Diagramms ist die Position entlang der Führung aufgetragen (im Ausführungsbeispiel in Millimetern). Entlang der vertikalen Achse ist die geometrische Abweichung bezüglich eines Freiheitsgrades aufgetragen (im Ausführungsbeispiel in Mikrometern). Wie auch bei den folgenden Figuren handelt es sich um ein vereinfachtes Beispiel. In der Praxis wird es bevorzugt, Messwerte der geometrischen Abweichung an einer sehr viel höheren Anzahl von Positionen aufzunehmen. Dies gilt auch dann, wenn Zwischenpositionen vorhanden sind. Auch ist die Differenz zwischen den Verläufen der Messwerte im Allgemeinen nicht konstant, insbesondere aufgrund von örtlichen und zeitlichen Temperaturunterschieden.

Die in Fig. 1 dargestellten Verläufe der gemessenen geometrischen Abweichungen des Führungsfehlers, die aus Messungen bei Bewegung in Vorwärts- und Rückwärtsrichtung erhalten wurden, können auch als Vorlauf 20 und Rücklauf 10 bezeichnet werden. Im Ausführungsbeispiel weisen der Vorlauf 20 und der Rücklauf 10 jeweils eine konstante Schrittweite von z. B. 20 mm zwischen den Messpositionen auf. Die Schrittweite ist für die beiden Verläufe gleich. Der Verlauf der arithmetischen Mittelwerte 30, die aus den Messwerten des Vorlaufs 20 und des Rücklaufs 10 berechnet werden, ist durch eine Linie dargestellt, die mittig zwischen den beiden Linien für den Vorlauf 20 und den Rücklauf 10 liegt.

Ein detaillierterer Verlauf der Mittelwerte mit mehr Stützstellen als in Fig. 1 könnte dadurch erhalten werden, dass die Schrittweite der Messwerte für Vorlauf und Rücklauf reduziert wird. Dies erhöht jedoch den Zeitaufwand unnötig. Wie anhand der folgenden Figuren näher beschrieben wird, kann auch mit unwesentlich größerem Zeitaufwand für die Messungen erheblich mehr Messinformation gewonnen werden, aus der ein detaillierterer Verlauf der Mittelwerte berechnet werden kann.

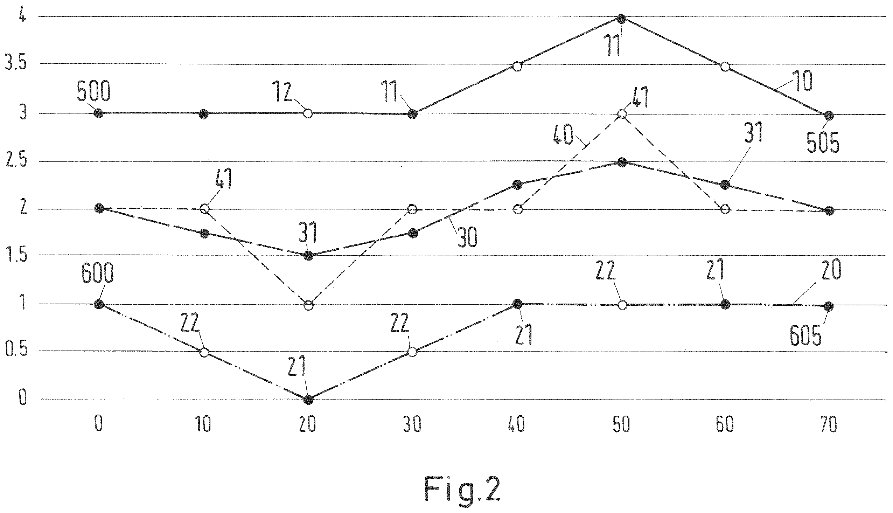

In Fig. 2 sind ähnlich wie in Fig. 1 Verläufe von Messwerten für entgegengesetzte Bewegungsrichtungen, nämlich ein Vorlauf 20 und ein Rücklauf 10 dargestellt. Die Unterschiede bestehen in einer verringerten Schrittweite zwischen den Stützstellen und darin, dass sowohl beim Vorlauf 20 als auch beim Rücklauf 10 zwischen mehreren Paaren von benachbarten Messpositionen 21 eine Zwischenposition 22 liegt, an der kein Messwert aufgenommen wurde, an der jedoch der andere Verlauf einen Messwert enthält. Beim Rücklauf 10 wird daher an Positionen 11 gemessen, an denen beim Vorlauf nicht gemessen wird und umgekehrt. Auf diese Art lässt sich Messzeit sparen, da pro Verlauf weniger Messwerte erfasst werden, als wenn an jeder Position sowohl im Vorlauf als auch im Rücklauf gemessen wird. Dennoch ist die insgesamt erhaltene Messinformation nicht erheblich geringer.

Im Ausführungsbeispiel wird an den Zwischenpositionen 12, 22 jeweils durch Bildung des arithmetischen Mittelwertes der Werte an den beiden nächst benachbarten Messpositionen 11, 21 des Verlaufs ein interpolierter Wert des Verlaufs 10, 20 berechnet. Somit erhält man zusätzliche Werte für den Vor- und Rücklauf, die zwar keine Messwerte sind, jedoch mit hoher Wahrscheinlichkeit nur geringfügig von Messwerten abweichen. Durch die im Folgenden beschriebene Kombination der in Vorlauf und Rücklauf enthaltenen Information erhöht sich die Wahrscheinlichkeit weiter, dass das Ergebnis sich nicht wesentlich von dem Ergebnis unterscheidet, welches bei Erfassung von Messwerten auch an den Zwischenpositionen entstanden wäre. Das Ergebnis der Erfassung der geometrischen Abweichung erhält man in dem Beispiel der Fig. 2 durch Mittelwertbildung der Werte aus Vorlauf und Rücklauf unter Berücksichtigung der interpolierten Werte an den Zwischenpositionen.

Im Fall der Fig. 2 folgen jeweils im Rücklauf 10 und im Vorlauf 20 die Messpositionen 11, 21 und die Zwischenpositionen 12, 22 alternierend aufeinander. Auch sind mit Ausnahme der Randpositionen der Verläufe alle Messpositionen 11 des Rücklaufs 10 um eine Schrittweite (die gleich dem Positionsabstand zweier aufeinander folgender Stützstellen der Verläufe ist) gegen die Messpositionen 21 des Vorlaufs 20 versetzt. Gleiches gilt wegen der alternierenden Folge der Messpositionen 11, 21 und der Zwischenpositionen 12, 22 auch für die Zwischenpositionen 12, 22. Wie oben bereits beschrieben können die Zwischenpositionen bei alternativen Ausführungsformen anders gegeneinander versetzt sein, z. B. um mehr als eine Schrittweite.

Im Ausführungsbeispiel der Fig. 2 liegen wie auch in den Ausführungsbeispielen der folgenden Figuren an den Startpositionen 505, 600 und den Endpositionen 500, 605 der Verläufe ausschließlich Messpositionen. Daher kann eine Extrapolation vermieden werden.

Zwei in Fig. 2 dargestellte Verläufe 30, 40 liegen zwischen dem Vorlauf 20 und dem Rücklauf 10. Bei dem Verlauf 30 handelt es sich um den Verlauf der arithmetischen Mittelwerte 31 der Messwerte und interpolierten Werte des Vorlaufs 20 und des Rücklaufs 10. Bei dem gestrichelt dargestellten Verlauf 40 handelt es sich um einen Referenzverlauf. Seine Werte 41 wurden aus arithmetischen Mittelwerten eines nicht in Fig. 2 dargestellten Vorlaufs und eines nicht in Fig. 2 dargestellten Rücklaufs gebildet, die statt den Zwischenpositionen 12, 22 Messpositionen enthalten. Durch den Vergleich des Verlaufs 30 mit dem Referenzverlauf 40 kann die Güte des Ergebnisses beurteilt werden, das mit dem erfindungsgemäßen Verfahren erreicht wird.

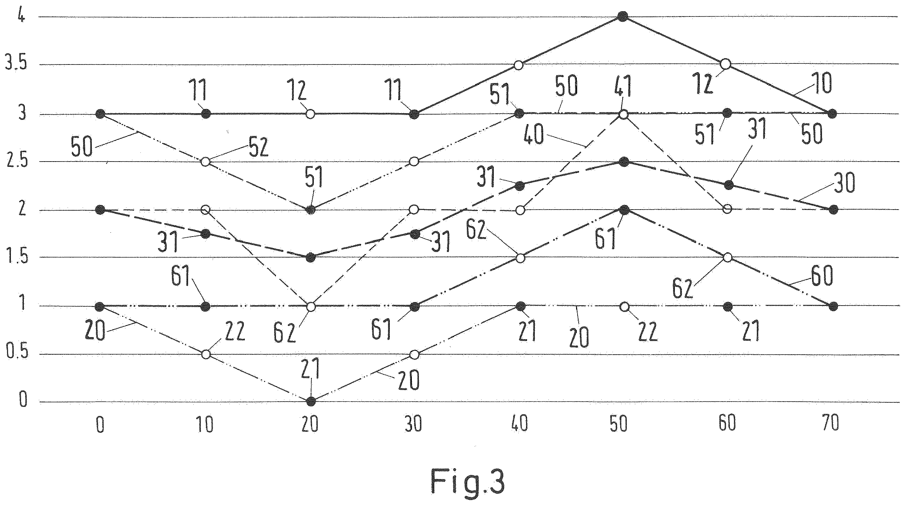

Fig. 3 zeigt insgesamt vier Verläufe 10, 20, 50, 60 mit jeweils Messpositionen 11, 21, 51, 61 und Zwischenpositionen 12, 22, 52, 62. Die Verläufe 10, 20 sind der Vorlauf 20 und der Rücklauf 10 aus dem Ausführungsbeispiel der Fig. 2. Nach dem ersten Rücklauf 10 wurde jedoch ein zweiter Vorlauf 60 und danach ein zweiter Rücklauf 50 aufgenommen. Dabei sind die Messpositionen und Zwischenpositionen der beiden Vorläufe 20, 60 und der beiden Rückläufe 10, 50 in der gleichen Weise alternierend angeordnet und um eine Schrittweite gegeneinander versetzt wie bei dem ersten Vorlauf 20 und dem ersten Rücklauf 10.

Die Unterschiede zwischen den beiden Vorläufen 20, 60 und den beiden Rückläufen 10, 50 beruhen z.B. auf einer Veränderung der Temperaturverteilung entlang der Bewegungsführung. Der Verlauf 30 der arithmetischen Mittelwerte zwischen dem ersten Vorlauf 20 und dem ersten Rücklauf 10 einerseits und dem zweiten Vorlauf 60 und dem zweiten Rücklauf 50 andererseits ist jedoch in diesem Ausführungsbeispiel identisch. Wie auch in Fig. 2 ist der Referenzverlauf 40 der Mittelwerte 31 als gestrichelte Linie dargestellt.

Der Verlauf 30 der arithmetischen Mittelwerte kann auf unterschiedliche Weise berechnet werden. Z.B. wird zunächst jeweils einzeln für die vier Verläufe 10, 20, 50, 60 der Messwerte an jeder Zwischenposition ein interpolierter Wert aus dem Verlauf ermittelt. Danach wird jeweils für die beiden Vorläufe 20, 60 und die beiden Rückläufe 10, 50 ein Verlauf von deren Mittelwerten (nicht dargestellt) an den Stützstellen der Messpositionen und der Zwischenpositionen ermittelt. Aus diesen Verläufen der Mittelwerte wird dann durch Mittelwertbildung der Verlauf 30 ermittelt. Alternativ wird nach der Interpolation an den Zwischenpositionen zunächst je ein Verlauf der arithmetischen Mittelwerte des ersten Vorlaufs 20 und des ersten Rücklaufs 10 sowie des zweiten Vorlaufs 60 und des zweiten Rücklaufs 50 ermittelt. Danach werden die Werte der beiden Verläufe der Mittelwerte gemittelt und der Verlauf 30 erhalten.

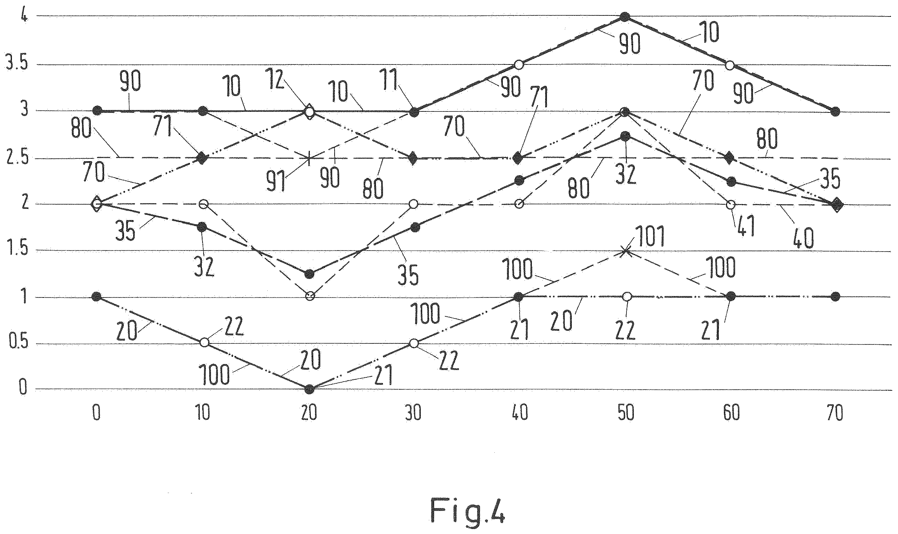

Fig. 4 stellt wie in Fig. 2 und Fig. 3 den Vorlauf 20 und den Rücklauf 10 dar. Durch die im Folgenden beschriebene Vorgehensweise, die eine Extraktion langperiodischer Anteile des Hystereseeffekts von Vorlauf und Rücklauf beinhaltet, wird die Abweichung zum Referenzverlauf der Mittelwerte weiter verringert. Das Extrahieren der langperiodischen Hystereseeffekte wird durch eine Tiefpassfilterung erreicht, die auch als Glättung bezeichnet werden kann. Durch die Glättung wird ein geglätteter Verlauf von Differenzen der Werte des Vorlaufs 20 und des Rücklaufs 10 berechnet. Im Folgenden wird ein spezielles Ausführungsbeispiel für die Vorgehensweise beschrieben, das den Schritt der Glättung des Verlaufs der Differenzen der Werte des Vorlaufs 20 und des Rücklaufs 10 zur Bildung des geglätteten Verlaufs von Differenzen beinhaltet.

Zunächst wird an den Zwischenpositionen wie bereits anhand von Fig. 2 beschrieben jeweils ein interpolierter Wert des Verlaufs 10, 20 ermittelt. Anschließend wird für jede Stützstelle der Verläufe 10, 20, d.h. an den Messpositionen und an den Zwischenpositionen, die Differenz der Werte der Verläufe 10, 20 gebildet. Der resultierende Verlauf der mit Rauten dargestellten Differenzen 71 ist in Fig. 4 durch eine strichpunktierte Linie mit dem Bezugszeichen 70 bezeichnet. Es ist zu beachten, dass anders als in dem in Fig. 4 dargestellten Ausführungsbeispiel der Verlauf der Differenzen nicht zwischen dem Vorlauf und dem Rücklauf liegen muss.

Nun wird der Verlauf 70 geglättet, indem ein Tiefpassfilter auf den Verlauf 70 angewendet wird. Dadurch wird der geglättete Verlauf 80 von Differenzen erhalten. Im Ausführungsbeispiel handelt es sich bei dem Verlauf 80 um eine horizontal verlaufende Gerade, d.h. um eine Gerade mit konstanten Werten. Sie ist in Fig. 4 gestrichelt dargestellt.

Nun wird lediglich an den Zwischenpositionen 12, 22 des Rücklaufs 10 und des Vorlaufs 20 erneut ein Wert der geometrischen Abweichung ermittelt. Hierzu wird an der Zwischenposition 12, 22 der gemessene Wert des anderen Verlaufs von Messpositionen um den Wert des geglätteten Verlaufs 80 von Differenzen versetzt. Für die Zwischenpositionen des Vorlaufs 20 bedeutet dies, dass die Messwerte des Rücklaufs 10 um den Wert des geglätteten Verlaufs 80 von Differenzen reduziert werden. Für die Zwischenpositionen des Rücklaufs 10 bedeutet dies, dass jeweils der gemessene Wert des Vorlaufs 20 um den Wert des geglätteten Verlaufs 80 von Differenzen erhöht wird. In dem dargestellten Ausführungsbeispiel ergeben sich durch diese Vorgehensweise lediglich an zwei Zwischenpositionen Modifikationen gegenüber dem direkt aus dem Verlauf 10, 20 ermittelten interpolierten Wert. Die mit den modifizierten Werten an den Zwischenpositionen erhaltenen Verläufe 90, 100 sind in Fig. 4 durch gestrichelte Linien dargestellt. Die einzige Abweichung zwischen dem Vorlauf 20 und dem modifizierten Vorlauf 100 ergibt sich an der dritten Zwischenposition von links. Dort ist der modifizierte Wert 101 größer als der ursprünglich linear interpolierte Wert des Verlaufs 20. Die einzige Abweichung zwischen dem Rücklauf 10 und dem modifizierten Rücklauf 90 findet sich an der dritten Zwischenposition von rechts, die gleich der zweiten Messposition des Vorlaufs 20 und der dritten Stützstelle des Vorlaufs 20 ist. An dieser Position ist der modifizierte Wert 91 kleiner als der ursprünglich linear interpolierte Wert.

Im nächsten Schritt wird an jeder Stützstelle des modifizierten Vorlaufs 100 und des modifizierten Rücklaufs 90 der arithmetische Mittelwert der modifizierten Verläufe 90, 100 gebildet. Dadurch wird der Verlauf 35 von arithmetischen Mittelwerten 32 gebildet, der durch eine gestrichelte Linie in Fig. 4 dargestellt ist. Der Referenzverlauf 40 aus den Fig. 2 und 3 ist auch in Fig. 4 dargestellt. Durch Vergleich der Ergebnisse der Ausführungsbeispiele gemäß Fig. 3 und Fig. 4 mit dem gemeinsamen Referenzverlauf 40 ist leicht erkennbar, dass die Bildung des geglätteten Verlaufs 80 von Differenzen und die Berücksichtigung dieses geglätteten Verlaufs 80 bei der Berechnung der Werte an den Zwischenpositionen zu einer geringeren Abweichung zum Referenzverlauf 40 und damit zu einem besseren Ergebnis führt.

Höherfrequente Abweichungen im Verlauf der Differenzen zwischen Vorlauf und Rücklauf beruhen auf zufälligen hochfrequenten Messfehlern und kurzperiodischen Führungsabweichungen. Im Gegensatz zu den kurzperiodischen Führungsabweichungen, die nach Möglichkeit vollständig mit zu erfassen sind, sollen die zufälligen hochfrequenten Messfehler nicht zum Ergebnis der Erfassung von geometrischen Abweichungen beitragen und sollen durch den Messaufbau und Optimierung der äußeren Bedingungen gering gehalten werden. Durch die oben beschriebene Filterung, d.h. Glättung, werden die im Vorlauf und Rücklauf auftretenden hochfrequenten zufälligen Fehler nicht extrahiert.

Die zufälligen hochfrequenten Fehler beruhen z.B. auf mechanischen Schwingungen oder anderen Störungen bei der Aufnahme der Messwerte. Z.B. bei Verwendung einer Laser-Messeinrichtung können Turbulenzen in dem Luftvolumen, das von der Laserstrahlung durchlaufen wird, zu solchen hochfrequenten Störungen führen.

Insbesondere können zur Glättung des Verlauf der Differenzen folgende Methoden angewendet werden: Anpassung (Fit) eines Polynoms n-ten Grades, z.B. dritten Grades, Anpassung (Fit) von Splines und/oder Bildung eines gleitenden Mittelwertes.

Der geglättete Verlauf von Differenzen kann auch dann verwendet werden, wenn wie z.B. im Ausführungsbeispiel der Fig. 3 mehrere Vorläufe und mehrere Rückläufe aufgenommen werden. In diesem Fall wird z.B. jeweils die Differenz zwischen dem ersten Vorlauf und dem ersten Rücklauf und dem zweiten Vorlauf und dem zweiten Rücklauf sowie optional jeweils die Differenz zwischen weiteren Vor- und Rückläufen gebildet. Dann wird der Verlauf der Differenzen jeweils geglättet und werden die modifizierten Werte an den Zwischenpositionen gebildet. Anschließend kann mit den resultierenden modifizierten Verläufen vorgegangen werden, wie es bereits für die gemessenen und interpolierten Verläufe anhand von Fig. 3 beschrieben wurde.

Durch die Bildung des geglätteten Verlaufs von Differenzen werden z.B. die oben bereits genannten möglichen Ursachen für die Hysterese zwischen Vorläufen und Rückläufen berücksichtigt.

Ein weiterer Vorteil der vorgestellten Vorgehensweise liegt darin, dass diese gefilterte Information lediglich dazu verwendet wird, aus tatsächlich aufgenommenen Messwerten des jeweils anderen Verlaufs Werte an den Zwischenpositionen zu bestimmen. Es geht somit keinerlei Messinformation verloren. An den Zwischenpositionen nicht vorhandene Informationen wird durch die gefilterte Information auf Basis der Messwerte des anderen Verlauf ergänzt.

Das erfindungsgemäße Verfahren kann insbesondere je nach Genauigkeitsklasse des Geräts (d.h. des Koordinatenmessgeräts oder der Werkzeugmaschine) in unterschiedlicher Weise vorteilhaft angewendet werden. Bei Geräten mit geringerer Genauigkeit sind größere Temperaturschwankungen zu erwarten, da meist kein hoher Aufwand betrieben wird, um die Temperatur konstant zu halten. Wenn die Schrittweite im Vergleich zur konventionellen Vorgehensweise (Aufnahme von Messwerten sowohl im Vorlauf als auch im Rücklauf an jeder Stückstelle) nicht oder nur wenig verringert wird, jedoch an Zwischenpositionen im Vorlauf und Rücklauf Messwerte nicht aufgenommen werden, kann die Gesamt-Zeitdauer der Messungen verkürzt werden. Daher wirken sich Temperaturschwankungen weniger stark auf das Ergebnis der Ermittlung der geometrischen Abweichungen aus. Bei hochgenauen Geräten, für die aufgrund entsprechender Maßnahmen mit geringeren Temperaturschwankungen zu rechnen ist, wird jedoch die Schrittweite zwischen den Stützstellen gegenüber der konventionellen Vorgehensweise stärker verringert, indem z.B. alternierend im Vorlauf und Rücklauf jeweils zusätzliche Messpositionen vorgesehen werden, an denen sich im jeweils anderen Verlauf eine Zwischenposition befindet. Die Gesamt-Messzeit wird daher nur relativ wenig verlängert. Die Genauigkeit des Ergebnisses der Ermittlung der geometrischen Abweichungen wird aber deutlich verbessert. Wie bereits oben erwähnt, können beide Modifikationen im Vergleich zur konventionellen Vorgehensweise miteinander kombiniert werden.

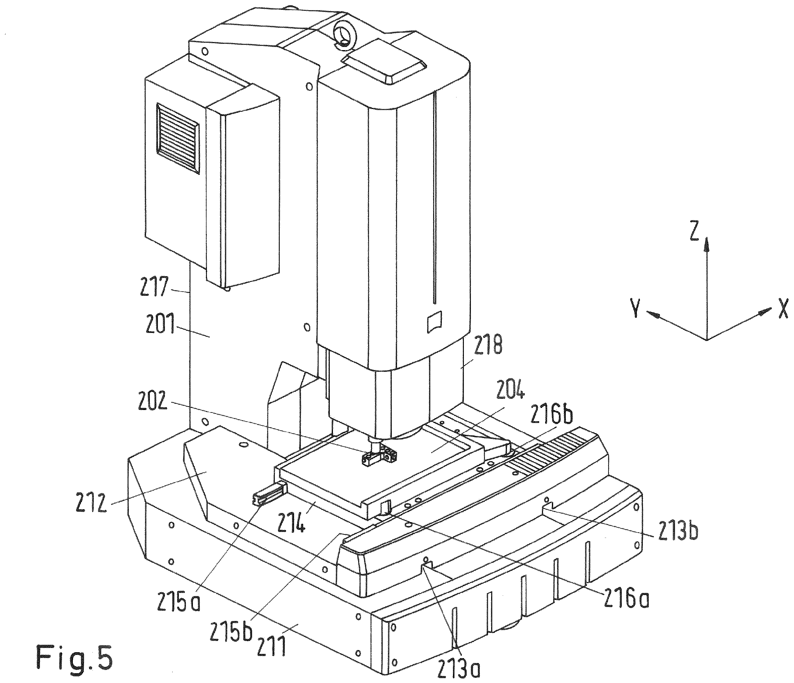

Das in Fig. 5 dargestellte Koordinatenmessgerät 201 ist ein Beispiel für ein KMG, dessen geometrische Fehler gemäß der vorliegenden Erfindung ermittelbar sind. Alternative Konstruktionen von Koordinatenmessgeräten mit Bewegungsführungen sind z. B. KMG in Portalbauweise, Gantrybauweise oder Gelenkarmbauweise. Das Prinzip der beweglichen Konstruktion von Werkzeugmaschinen kann das gleiche wie bei KMG sein.

Das KMG 201 weist eine Basis 211 auf, die sich z.B. auf einem Boden abstützt und die während des Betriebes des KMG 201 nicht bewegt wird. Rechts in Fig. 5 ist ein kartesisches Koordinatensystem X, Y, Z dargestellt. Die Oberfläche der Basis 211 verläuft im Wesentlichen in X-Richtung und Y-Richtung. Auf der Basis 211 ist ein Wagen 212 angeordnet, der entlang von in Y-Richtung verlaufenden Führungen 213a, 213b relativ zu der Basis 211 in Y-Richtung beweglich ist. Auf dem Wagen 212 wiederum ist ein Messtisch 214 angeordnet, der entlang von in X-Richtung verlaufenden Führungen 215a, 215b relativ zu dem Wagen 212 beweglich ist.

Die Bewegungen des Wagens 212 und des Messtischs 214 werden insbesondere über nicht dargestellte motorische Antriebe angetrieben. Der Messtisch 214 und der Wagen 212 bilden auf diese Weise gemeinsam mit den Führungen 213, 215 und den Antrieben einen Kreuztisch.

Auf dem Messtisch 214 ist ein Kalibriernormal 204 angeordnet, das eine ebene Kalibrierfläche aufweist, deren obere Oberfläche sich in X-Richtung und Y-Richtung erstreckt. In dem Ausführungsbeispiel ist das Kalibriernormal 204 über eine Drei-Punkt-Lagerung auf einer Oberfläche des Messtischs 214 aufgestellt. In Fig. 5 sind zwei Aufstandspunkte 216a, 216b der Drei-Punkt-Lagerung erkennbar.

Das KMG 201 weist außerdem einen Ständer 217 auf, der an seinem in Fig. 5 nach rechts vorne weisenden Bereich einen in Z-Richtung beweglichen Schlitten 218 aufweist. In dem in Fig. 5 dargestellten Zustand hält ein Halter des Schlittens 218 z. B. einen Messkopf (nicht in Fig. 5 erkennbar), an den wiederum eine Sensoranordnung 202 angekoppelt ist. Diese Sensoranordnung 202 weist eine Mehrzahl von Sensoren zur Bestimmung von Koordinaten von Oberflächenpunkten des Kalibriernormals 204 auf, insbesondere Abstandssensoren. In dem dargestellten Ausführungsbeispiel ist der Halter des Schlittens 218 und/oder der Messkopf um die Z-Achse drehbeweglich, sodass die Sensoranordnung 202 um die Z-Achse gedreht werden kann.

Zur Aufnahme der Messwerte für die geometrische Abweichung der oben genannten Führungen 215a, 215b wird der Messtisch 214 in der X- Richtung bewegt, so dass sich das Kalibriernormal 204 ebenfalls in der X-Richtung bewegt. Dabei ist die Sensoranordnung 202 an der rechts vorne liegenden seitlichen Aufkantung des Kalibriernormal 204 angeordnet und misst den Abstand zu der Oberfläche der Aufkantung. Wenn die Geometrie des Kalibriernormals 204 bekannt ist und/oder entsprechende Korrekturwerte zur Berücksichtigung von Abweichungen der Geometrie des Kalibriernormals 204 von einer idealen Geometrie bekannt sind, kann aus der Abstandsmessung der geometrische Fehler der Führung ermittelt werden.

## Patentansprüche

1. Verfahren zur Erfassung von geometrischen Abweichungen einer realen Bewegungsführung (213a, 213b, 215a, 215b) von einer idealen Bewegungsführung bei einem Koordinatenmessgerät (201), das einen Sensor zur Vermessung eines Werkstücks aufweist, oder bei einer Werkzeugmaschine, die ein Werkzeug zur Bearbeitung eines Werkstücks aufweist, wobei das Koordinatenmessgerät (201) oder die Werkzeugmaschine ein entlang der Bewegungsführung (213a, 213b, 215a, 215b) und von der Bewegungsführung (213a, 213b, 215a, 215b) geführtes bewegliches Teil (212, 214) aufweist, wobei
• das bewegliche Teil (212, 214) in einer Vorwärtsrichtung entlang der Bewegungsführung (213a, 213b, 215a, 215b) bewegt wird und an einer Mehrzahl von ersten Positionen (21) des beweglichen Teils (212, 214) bezüglich der Bewegungsführung (213a, 213b, 215a, 215b) jeweils ein Messwert der geometrischen Abweichung aufgenommen wird, so dass eine erste Gruppe von Messwerten aufgenommen wird,
• das bewegliche Teil (212, 214) in einer Rückwärtsrichtung, die entgegengesetzt zu der Vorwärtsrichtung verläuft, entlang der Bewegungsführung (213a, 213b, 215a, 215b) bewegt wird und an einer Mehrzahl von zweiten Positionen (11) des beweglichen Teils (212, 214) bezüglich der Bewegungsführung (213a, 213b, 215a, 215b) jeweils ein Messwert der geometrischen Abweichung aufgenommen wird, so dass eine zweite Gruppe von Messwerten aufgenommen wird,
• bei der Aufnahme der ersten Gruppe von Messwerten kein Messwert an zumindest einer ersten Zwischenposition (22) aufgenommen wird, die zwischen zwei der ersten Positionen (21) an einer der zweiten Positionen (11) liegt, und/oder wobei bei der Aufnahme der zweiten Gruppe von Messwerten kein Messwert an zumindest einer zweiten Zwischenposition (12) aufgenommen wird, die zwischen zwei der zweiten Positionen (11) an einer der ersten Positionen (21) liegt,
• für jede der ersten Positionen (21) und für jede der zweiten Positionen (11) aus dem Verlauf (20) der ersten Gruppe von Messwerten entlang der Bewegungsführung (213a, 213b, 215a, 215b) und aus dem Verlauf (10) der zweiten Gruppe von Messwerten entlang der Bewegungsführung (213a, 213b, 215a, 215b) ein Mittelwert (31) der geometrischen Abweichung der Bewegungsführung (213a, 213b, 215a, 215b) berechnet wird und auf diese Weise eine Gruppe von Mittelwerten gebildet wird, die die Mittelwerte der geometrischen Abweichungen bei Bewegung des beweglichen Teils (212, 214) in der Vorwärtsrichtung und der Rückwärtsrichtung sind.

2. Verfahren nach Anspruch 1, wobei das bewegliche Teil (212, 214) wiederholt in der Vorwärtsrichtung und/oder in der Rückwärtsrichtung entlang der Bewegungsführung (213a, 213b, 215a, 215b) bewegt wird und an einer Mehrzahl von dritten Positionen (61) bezüglich der Bewegung des beweglichen Teils (212, 214) in der Vorwärtsrichtung und/oder an einer Mehrzahl von vierten Positionen (51) bezüglich der Bewegung des beweglichen Teils (212, 214) in der Rückwärtsrichtung und bezüglich der Bewegungsführung (213a, 213b, 215a, 215b) jeweils ein Messwert der geometrischen Abweichung aufgenommen wird, so dass eine dritte und/oder vierte Gruppe von Messwerten aufgenommen wird, und wobei die Gruppe von Mittelwerten auch abhängig von den Verläufen (50, 60) der dritten und/oder vierten Gruppe von Messwerten gebildet wird.

3. Verfahren nach dem vorhergehenden Anspruch, wobei bei der Aufnahme der dritten Gruppe von Messwerten kein Messwert an zumindest einer dritten Zwischenposition (62) aufgenommen wird, die zwischen zwei der dritten Positionen (61) an einer der ersten Positionen (21) liegt, und/oder bei der Aufnahme der vierten Gruppe von Messwerten kein Messwert an zumindest einer vierten Zwischenposition (52) aufgenommen wird, die zwischen zwei der vierten Positionen (51) an einer der zweiten Positionen (11) liegt.

4. Verfahren nach einem der vorhergehenden Ansprüche, wobei zwischen jeweils zwei von mehreren Positionen (11, 21) zumindest einer der Gruppen von Messwerten eine konstant große Schrittweite liegt und wobei bei einer Hälfte der konstant großen Schrittweite jeweils eine der Zwischenpositionen (12, 22) liegt.

5. Verfahren nach einem der vorhergehenden Ansprüche, wobei ein geglätteter Verlauf (80) von Differenzen der Verläufe (10, 20) der ersten Gruppe und der zweiten Gruppe entlang der Bewegungsführung (213a, 213b, 215a, 215b) berechnet wird und wobei die Gruppe von Mittelwerten aus Werten des geglätteten Verlaufs (80) von Differenzen gebildet wird.

6. Verfahren nach dem vorhergehenden Anspruch, wobei zunächst durch Berechnung von Differenzen der Verläufe (10, 20) der ersten Gruppe und der zweiten Gruppe ein Verlauf (70) der Differenzen entlang der Bewegungsführung (213a, 213b, 215a, 215b) gebildet wird und dann der geglättete Verlauf (80) von Differenzen durch Glättung des Verlaufs (70) der Differenzen gebildet wird.

7. Verfahren nach Anspruch 5 oder 6, wobei an der zumindest einen ersten Zwischenposition (22) ein interpolierter Wert des Verlaufs (20) der ersten Gruppe von Messwerten gebildet wird, indem an der ersten Zwischenposition (22) der Messwert der zweiten Gruppe um den Betrag des geglätteten Verlaufs (80) von Differenzen an der ersten Zwischenposition (22) versetzt wird und/oder an der zumindest einen zweiten Zwischenposition (12) ein interpolierter Wert des Verlaufs (10) der zweiten Gruppe von Messwerten gebildet wird, indem an der zweiten Zwischenposition (12) der Messwert der ersten Gruppe um den Betrag des geglätteten Verlaufs (80) von Differenzen an der zweiten Zwischenposition (12) versetzt wird.

8. Anordnung zur Erfassung von geometrischen Abweichungen einer realen Bewegungsführung (213a, 213b, 215a, 215b) von einer idealen Bewegungsführung bei einem Koordinatenmessgerät (201), das einen Sensor zur Vermessung eines Werkstücks aufweist, oder bei einer Werkzeugmaschine, die ein Werkzeug zur Bearbeitung eines Werkstücks aufweist, wobei die Anordnung zur Ausführung des Verfahrens nach einem der Ansprüche 1 bis 7 eine Messeinrichtung (202) und eine Erfassungseinrichtung aufweist, wobei die Messeinrichtung (202) ausgestaltet ist, zumindest die erste Gruppe und die zweite Gruppe von Messwerten aufzunehmen, und die Erfassungseinrichtung ausgestaltet ist, die Gruppe von Mittelwerten zu bilden und dadurch die geometrischen Abweichungen zu erfassen.

9. Koordinatenmessgerät (201) oder Werkzeugmaschine mit der Anordnung nach Anspruch 8 und einer Steuerung, die ausgestaltet ist, eine Bewegung des beweglichen Teils (212, 214) in der Vorwärtsrichtung und der Rückwärtsrichtung entlang der Bewegungsführung (213a, 213b, 215a, 215b) zu steuern und die ersten und zweiten Positionen (11) an die Erfassungseinrichtung auszugeben.

## Claims

1. Method for identifying geometric deviations of a real motion guide (213a, 213b, 215a, 215b) from an ideal motion guide in a coordinate-measuring machine (201) having a sensor for measuring a workpiece, or in a machine tool having a tool for processing a workpiece, wherein the coordinate-measuring machine (201) or the machine tool has a movable part (212, 214) which is guided along the motion guide (213a, 213b, 215a, 215b) and by the motion guide (213a, 213b, 215a, 215b), wherein
• the movable part (212, 214) is moved in a forwards direction along the motion guide (213a, 213b, 215a, 215b), and in each case one measurement value of the geometric deviation is recorded at a plurality of first positions (21) of the movable part (212, 214) with respect to the motion guide (213a, 213b, 215a, 215b), with the result that a first group of measurement values is recorded,
• the movable part (212, 214) is moved in a backwards direction, which runs counter to the forwards direction, along the motion guide (213a, 213b, 215a, 215b), and in each case one measurement value of the geometric deviation is recorded at a plurality of second positions (11) of the movable part (212, 214) with respect to the motion guide (213a, 213b, 215a, 215b), with the result that a second group of measurement values is recorded,
• during the recording of the first group of measurement values, no measurement value is recorded at at least one first intermediate position (22) which is situated between two of the first positions (21) at one of the second positions (11), and/or wherein during the recording of the second group of measurement values, no measurement value is recorded at at least one second intermediate position (12) which is situated between two of the second positions (11) at one of the first positions (21),
• for each of the first positions (21) and for each of the second positions (11), an average (31) of the geometric deviation of the motion guide (213a, 213b, 215a, 215b) is calculated from the profile (20) of the first group of measurement values along the motion guide (213a, 213b, 215a, 215b) and from the profile (10) of the second group of measurement values along the motion guide (213a, 213b, 215a, 215b), and in this way a group of averages is formed which are the averages of the geometric deviations when moving the movable part (212, 214) in the forwards direction and in the backwards direction.

2. Method according to Claim 1, wherein the movable part (212, 214) can be moved repeatedly in the forwards direction and/or in the backwards direction along the motion guide (213a, 213b, 215a, 215b), and in each case a measurement value of the geometric deviation can be recorded at a plurality of third positions (61) with respect to the movement of the movable part (212, 214) in the forwards direction and/or at a plurality of fourth positions (51) with respect to the movement of the movable part (212, 214) in the backwards direction and with respect to the motion guide (213a, 213b, 215a, 215b), with the result that a third and/or fourth group of measurement values is recorded, and wherein the group of averages is also formed in dependence on the profiles (50, 60) of the third and/or fourth group of measurement values.

3. Method according to the preceding claim, wherein, during the recording of the third group of measurement values, no measurement value is recorded at at least one third intermediate position (62) which is situated between two of the third positions (61) at one of the first positions (21), and/or during the recording of the fourth group of measurement values, no measurement value is recorded at at least one fourth intermediate position (52) which is situated between two of the fourth positions (51) at one of the second positions (11).

4. Method according to one of the preceding claims, wherein a step width of constant size is located between in each case two of a plurality of positions (11, 21) of at least one of the groups of measurement values, and wherein in each case one of the intermediate positions (12, 22) is situated at one half of the step width of constant size.

5. Method according to one of the preceding claims, wherein a smoothed profile (80) of differences of the profiles (10, 20) of the first group and of the second group along the motion guide (213a, 213b, 215a, 215b) is calculated, and wherein the group of averages is formed from values of the smoothed profile (80) of differences.

6. Method according to the preceding claim, wherein a profile (70) of the differences along the motion guide (213a, 213b, 215a, 215b) is formed initially by calculating differences of the profiles (10, 20) of the first group and of the second group, and then the smoothed profile (80) of differences is formed by smoothing the profile (70) of the differences.

7. Method according to Claim 5 or 6, wherein an interpolated value of the profile (20) of the first group of measurement values is formed at the at least one first intermediate position (22) by offsetting the measurement value of the second group at the first intermediate position (22) by the absolute value of the smoothed profile (80) of differences at the first intermediate position (22) and/or an interpolated value of the profile (10) of the second group of measurement values is formed at the at least one second intermediate position (12) by offsetting the measurement value of the first group at the second intermediate position (12) by the absolute value of the smoothed profile (80) of differences at the second intermediate position (12).

8. Arrangement for identifying geometric deviations of a real motion guide (213a, 213b, 215a, 215b) from an ideal motion guide in a coordinate-measuring machine (201) having a sensor for measuring a workpiece, or in a machine tool having a tool for processing a workpiece, wherein the arrangement for performing the method according to one of Claims 1 to 7 has a measurement device (202) and an identification device, wherein the measurement device (202) is configured to record at least the first group and the second group of measurement values, and the identification device is configured to form the group of averages and to identify therefrom the geometric deviations.

9. Coordinate-measuring machine (201) or a machine tool having the arrangement according to Claim 8 and a controller that is configured to control a movement of the movable part (212, 214) in the forwards direction and in the backwards direction along the motion guide (213a, 213b, 215a, 215b) and to output the first and second positions (11) to the identification device.

## Revendications

1. Procédé de détection d'écarts géométriques d'un guidage de mouvement réel (213a, 213b, 215a, 215b) par rapport à un guidage de mouvement idéal au niveau d'un appareil de mesure de coordonnées (201), lequel possède un capteur destiné à mesurer une pièce, ou au niveau d'une machine-outil, laquelle possède un outil servant à usiner une pièce, l'appareil de mesure de coordonnées (201) ou la machine-outil possédant une partie mobile (212, 214) guidée le long du guidage de mouvement (213a, 213b, 215a, 215b) et par le guidage de mouvement (213a, 213b, 215a, 215b),
* la partie mobile (212, 214) étant déplacée le long du guidage de mouvement (213a, 213b, 215a, 215b) dans une direction vers l'avant et une valeur mesurée de l'écart géométrique est respectivement enregistrée en une pluralité de premières positions (21) de la partie mobile (212, 214) par rapport au guidage de mouvement (213a, 213b, 215a, 215b), de sorte qu'un premier groupe de valeurs mesurées est enregistré,
* la partie mobile (212, 214) étant déplacée le long du guidage de mouvement (213a, 213b, 215a, 215b) dans une direction vers l'arrière, qui s'étend à l'opposé de la direction vers l'avant, et une valeur mesurée de l'écart géométrique est respectivement enregistrée en une pluralité de deuxièmes positions (11) de la partie mobile (212, 214) par rapport au guidage de mouvement (213a, 213b, 215a, 215b), de sorte qu'un deuxième groupe de valeurs mesurées est enregistré,
* lors de l'enregistrement du premier groupe de valeurs mesurées, aucune valeur mesurée n'étant enregistrée au niveau d'au moins une première position intermédiaire (22) qui se trouve entre deux des premières positions (21) au niveau de l'une des deuxièmes positions (11), et/ou lors de l'enregistrement du deuxième groupe de valeurs mesurées, aucune valeur mesurée n'étant enregistrée au niveau d'au moins une deuxième position intermédiaire (12) qui se trouve entre deux des deuxièmes positions (11) au niveau de l'une des premières positions (21),
* une valeur moyenne (31) de l'écart géométrique du guidage de mouvement (213a, 213b, 215a, 215b) étant calculée pour chacune des premières positions (21) et pour chacune des deuxièmes positions (11) à partir du tracé (20) du premier groupe de valeurs mesurées le long du guidage de mouvement (213a, 213b, 215a, 215b) et à partir du tracé (10) du deuxième groupe de valeurs mesurées le long du guidage de mouvement (213a, 213b, 215a, 215b), et un groupe de valeurs moyennes étant ainsi formé, lesquelles sont les valeurs moyennes des écarts géométriques lors du déplacement de la partie mobile (212, 214) dans la direction vers l'avant et dans la direction vers l'arrière.

2. Procédé selon la revendication 1, la partie mobile (212, 214) étant déplacée de manière répétitive dans la direction vers l'avant et/ou dans la direction vers l'arrière le long du guidage de mouvement (213a, 213b, 215a, 215b) et une valeur mesurée de l'écart géométrique est respectivement enregistrée en une pluralité de troisièmes positions (61) concernant le mouvement de la partie mobile (212, 214) dans la direction vers l'avant et/ou en une pluralité de quatrièmes positions (51) concernant le mouvement de la partie mobile (212, 214) dans la direction vers l'arrière et concernant le guidage de mouvement (213a, 213b, 215a, 215b), de sorte qu'un troisième et/ou un quatrième groupes de valeurs mesurées sont enregistrés, et le groupe de valeurs moyennes étant également formé en fonction des tracés (50, 60) du troisième et/ou quatrième groupes de valeurs mesurées.

3. Procédé selon la revendication précédente, lors de l'enregistrement du troisième groupe de valeurs mesurées, aucune valeur mesurée n'étant enregistrée au niveau d'au moins une troisième position intermédiaire (62) qui se trouve entre deux des troisièmes positions (61) au niveau de l'une des premières positions (21), et/ou lors de l'enregistrement du quatrième groupe de valeurs mesurées, aucune valeur mesurée n'étant enregistrée au niveau d'au moins une quatrième position intermédiaire (52) qui se trouve entre deux des quatrièmes positions (51) au niveau de l'une des deuxièmes positions (11).

4. Procédé selon l'une des revendications précédentes, une largeur de pas de taille constante se trouvant respectivement entre deux de plusieurs positions (11, 21) d'au moins l'un des groupes de valeurs mesurées et l'une des positions intermédiaires (12, 22) se trouvant respectivement au niveau d'une moitié de la largeur de pas de taille constante.

5. Procédé selon l'une des revendications précédentes, un tracé lissé (80) des différences des tracés (10, 20) du premier groupe et du deuxième groupe le long du guidage de mouvement (213a, 213b, 215a, 215b) étant calculé et le groupe de valeurs moyennes étant formé à partir des valeurs du tracé lissé (80) des différences.

6. Procédé selon la revendication précédente, un tracé (70) des différences le long du guidage de mouvement (213a, 213b, 215a, 215b) étant tout d'abord formé par le calcul des différences des tracés (10, 20) du premier groupe et du deuxième groupe et le tracé lissé (80) des différences étant ensuite formé par lissage du tracé (70) des différences.

7. Procédé selon la revendication 5 ou 6, une valeur interpolée du tracé (20) du premier groupe de valeurs mesurées étant formée au niveau de l'au moins une première position intermédiaire (22) en décalant, au niveau de la première position intermédiaire (22), la valeur mesurée du deuxième groupe de la valeur du tracé lissé (80) des différences au niveau de la première position intermédiaire (22) et/ou une valeur interpolée du tracé (10) du deuxième groupe de valeurs mesurées étant formée au niveau de l'au moins une deuxième position intermédiaire (12) en décalant, au niveau de la deuxième position intermédiaire (12), la valeur mesurée du premier groupe de la valeur du tracé lissé (80) des différences au niveau de la deuxième position intermédiaire (12).

8. Arrangement de détection d'écarts géométriques d'un guidage de mouvement réel (213a, 213b, 215a, 215b) par rapport à un guidage de mouvement idéal au niveau d'un appareil de mesure de coordonnées (201), lequel possède un capteur destiné à mesurer une pièce, ou au niveau d'une machine-outil, laquelle possède un outil servant à usiner une pièce, l'arrangement possédant un dispositif de mesure (202) et un dispositif de détection en vue de mettre en oeuvre le procédé selon l'une des revendications 1 à 7, le dispositif de mesure (202) étant configuré pour enregistrer au moins le premier groupe et le deuxième groupe de valeurs mesurées, et le dispositif de détection étant configuré pour former le groupe de valeurs moyennes et ainsi pour détecter les écarts géométriques.

9. Appareil de mesure de coordonnées (201) ou machine-outil comprenant l'arrangement selon la revendication 8 et une commande, laquelle est configurée pour commander un mouvement de la partie mobile (212, 214) dans la direction vers l'avant et dans la direction vers l'arrière le long du guidage de mouvement (213a, 213b, 215a, 215b) et délivrer les première et deuxième positions (11) au dispositif de détection.
